**Europäisches Patentamt**

**European Patent Office**

**Office européen des brevets**

(19)

(11) Publication number: **0 385 052**
**A1**

# EUROPEAN PATENT APPLICATION

(12)

(21) Application number: **89830079.3**

(22) Date of filing: **28.02.89**

(51) Int. Cl.⁵: **F16L 37/12**

(43) Date of publication of application:
**05.09.90 Bulletin 90/36**

(84) Designated Contracting States:
**BE DE ES FR GB GR NL SE**

(71) Applicant: **BOSTEL S.n.c. degli eredi di Carlo e Lina Stello**
**Via G.C. Clerici, 432**
**I-20091 Bresso (Milano)(IT)**

(72) Inventor: **Bosotti, Carlo**
**Via G.C. Clerici, 432**
**I-20091 Bresso (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Device for closing pressurized filters and vessels.**

(57) There is disclosed a tight closing device for pressurized vessels, including a fitting member for coupling to the pressurized vessel, which fitting member comprises a body (2) to be coupled to coupling means including at least two band portions (20) provided with means (22) for axially restraining the filter body with respect to the fitting member, there being moreover provided means (30) for radially restraining the band portions (20).

Fig.2

EP 0 385 052 A1

# DEVICE FOR CLOSING PRESSURIZED FILTERS AND VESSELS

## BACKGROUND OF THE INVENTION

The present invention relates to a tigh closure device for filters or pressurized vessels, which device has the feature that it can not be opened as the filter or vessel thereon it is mounted is under pressure.

As is known,in many fields,such as pressurized fluid circuits and the like,there are used filtering device or apparatus which comprise several coupling fittings providing the filtering device or apparatus with periodical maintenance capabilities.

In order to carry out a maintenance operation in a very quick and reliable way,the parts to be disassembled must be as simple as possible constructionwise,easily accessible and moreover a perfect tightness should be held after any maintenance operations.

Known closure devices of the above mentioned type comprise very complex arrangements which have frequently the drawback that the operations for assembling and disengaging the tightness devices are very long and require the use of specifically designed tools.

## SUMMARY OF THE INVENTION

Accordingly,the aim of the present invention is to overcome the above mentioned drawbacks,by providing a tight closing device,including a fitting member for coupling to pressurized circuits which affords the possibility of removing and mounting the several components thereof in a very quick manner, without the need of using any specifically designed tools.

Within the scope of the above mentioned task, a main object of the present invention is to provide such a tight closing device which always affords a perfect tightness and is able of easily resisting against conventional use pressures.

Another object of the invention is to provide such a tight closing device which is very reliable in operation and can be easily constructed starting from easily commercially available materials and component elements and which,moreover,has a very reduced cost.

According to one aspect of the present invention, the above mentioned task and objects,as well as yet other objects,which will become more apparent hereinafter,are achieved by a tight closing device for pressurized filters and vessels,including a fitting member for coupling to pressurized circuits,having a body to be removably tightly associated with a coupling fitting,through coupling means,characterized in that said coupling means comprise at least two band portions provided with means for axially restraining the body of said pressurized filter or vessel with respect to said coupling fitting,there being moreover provided means for radially restraining said band portions.

## BRIEF DESCRIPTION OF THE DRAWINGS

Further characteristics and advantages of the invention will become more apparent hereinafter from the following detailed description of a tight closing device for pressurized filters and vessels according to the present invention,which is illustrated,by way of an indicative but not limitative example, in the accompanying drawings,where:

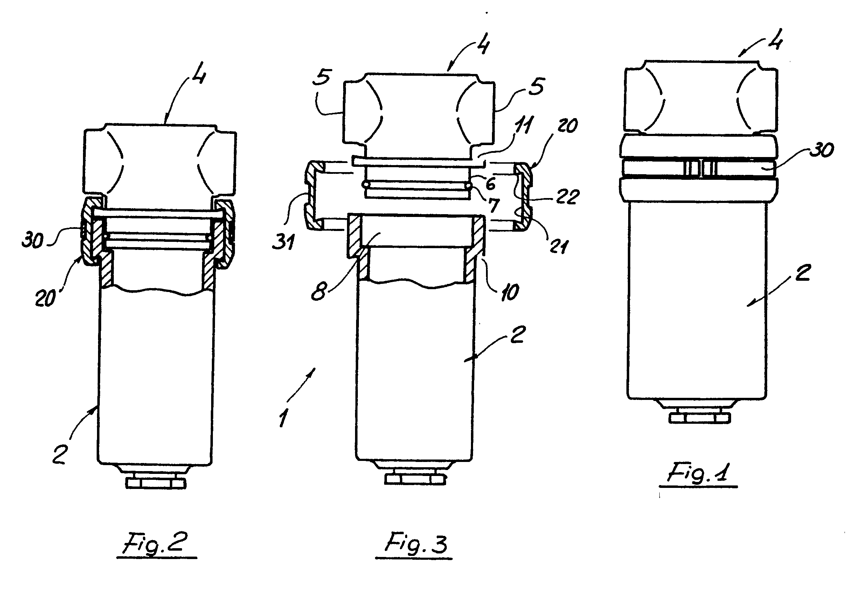

figure 1 schematically shows a front elevation view of a pressurized filter with coupling fitting according to the present invention;

figure 2 swhows a partially broken away view of a filter;

figure 3 is an exploded view showing the parts of a filter;

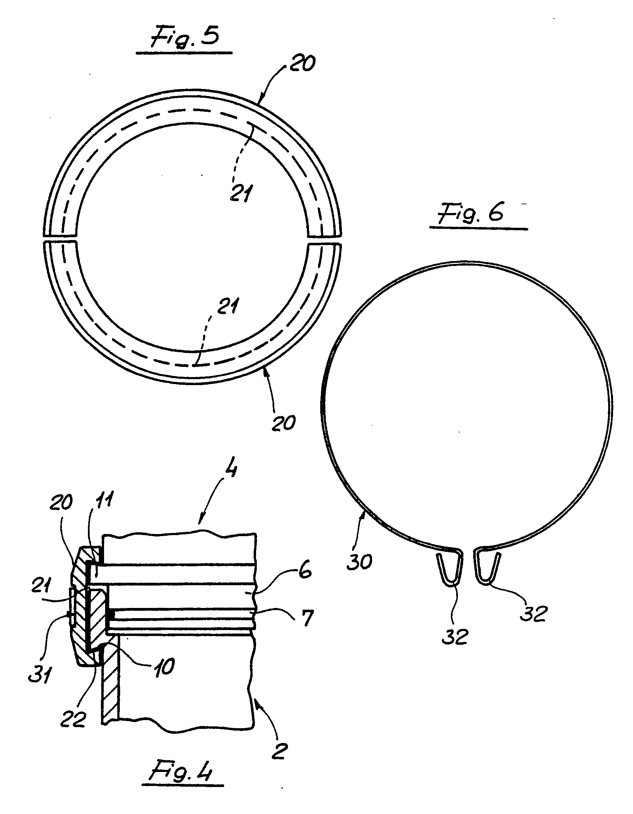

figure 4 is a cross-sectional view illustrating a detail of the coupling between the body of a filter and a coupling fitting; and

figure 5 is a top plan view of band portions included in the tight closing device according to the invention;

figure 6 is another top plan view illustrating means for radially restraining the band portions.

## DESCRIPTION OF THE PREFERRED EMBODIMENT

With reference to the figures of the accompanying drawings,the tight closing device according to the invention,which is indicated overally at the reference number 1,comprises a body 2 consisting of a cylindrical vessel 3 in the inside of which there is housed a conventional filtering cartridge.

In this connection it should be apparent that the cylindrical vessel 3 could include separating diaphragms,condensate discharging units and the like.

The body 2 can be tightly associated with a coupling fitting 4 which is provided with lead-in portions 5 for coupling said fitting on a pressurized fluid circuit,said fitting being furthermore provided with an end piece 6 adapted to be engaged in the body 2.

More specifically,the end piece 6 is provided with a groove receiving an annular tightness gasket 7 which engages in a tapering portion 8 formed at the open mouth of the body 2.

The body 2 is provided,at the outer portion of its coupling end,with an abutment 10,of converging slanted configuration,and the end piece 6 is provided with a corresponding flange 11,of converging slanted configuration.

In order to tightly coupling the fitting 4 and the filter body 2,there are provided,according to a main feature of the present invention,band portions 20 which have a semicircumferential shape and are provid ed,in the inside thereof,with a recess 21 defined by a pair of cut-off engagement edges 22.

These engagement edges 22,in particular, can be engaged with the abutment edge 11 and the abutment edge 10,in order to hold in an axial adjoining relationship the body 2 and coupling fitting 4.

The above disclosed structure is such that, in a pressure condition,the body 2 is firmly axially restrained on the coupling fitting 4 by means of half ring members 20.

As is should be apparent,the slanted arrangement of the surfaces 10-11-22 slits or divides the applied load into an axial load and a radial load and prevents the subject tight closing device from being disassembled under pressure.

This feature is very important,since the maintenance operations can be carried out in very safe conditions.

A resilient ring member 30,housed in a recessed portion 31 defined on the outer surface of the mentioned band portions 20 provides a slight useful mounting load,since it radially restrain the band portions 20.

Advantageously the ring member 30 is provided,at its free end portions,which are oppositedly arranged,with bent portions 32 adapted to facilitate the manual opening of the ring,as the tight closing device is disassembled,and in which a bridge or the like member can be housed adapted to properly arrange in its closed condition the ring member.

With the above disclosed arrangement,the body 2 can be tightly applied,with respect to the fitting member 4,in a very quick way,since it will be sufficient to engage the body 2 on the end piece 6 and apply the band portions 20 axially restraining said body;then,the coupling will be completed by mounting the resilient ring 30 for preventing the band portions 20 from spreading apart.

In order to remove the body 2,it will be sufficient to repeate,in the contrary or reverse order,the above disclosed operations.

From the above disclosure it should be apparent that the invention fully achieves the intended aim and objects.

In practicing the invention,the used materials may be any according to requirements.

## Claims

1- A tight closing device for pressurized filters and vessels,including a fitting member for coupling to pressurized circuits,having a body to be removably tightly associated with a coupling fitting,through coupling means,characterized in that said coupling means comprise at least two band portions provided with means for axially restraining the body of said pressurized filter or vessel with respect to said coupling fitting,there being moreover provided means for radially restraining said band portions.

2- A device according to claim 1,characterized in that said device comprises two or more band portions having a semicircumferential shape.

3- A device according to the preceding claims, characterized in that said body is provided,at the end thereof to be coupled to said coupling fitting,an abutment outer edge,said coupling fitting being provided with an end piece to be engaged in said body and having a flange engageable with the coupling end portion of said body.

4- A device according to one or more of the preceding claims,characterized in that said band portions are removably coupled with said abutment edge and said flange,the surfaces of which have the same slanting as the inner surfaces of said band portions and defined by the engagement edges.

5- A device according to one or more of the preceding claims,characterized in that said means for axially restraining said body of said filter consists of a recess defined on the inner surface of said band portions and defined by said engagement edges.

6- A device according to one or more of the preceding claims,characterized in that said means for radially restraining said band portions consists of a resilient ring adapted for engaging in a recess formed on the outer surface of said band portions.

7- A device according to one or more of the preceding claims,characterized in that said resilient ring is provided,at the end portions thereof,with bent portions adapted to be engaged with a bridge member so as to prevent said ring from being disengaged.

8- A device according to one or more of the preceding claims and substantially as disclosed and illustrated for the intended aim and objects.

Fig.4

Fig.3

Fig.2

*Fig. 5*

20

21

21

20

4

20  11

6

21

7

31

10

22

2

*Fig. 4*

*Fig. 6*

30

32

32

32

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 066 916 (JONSSON) | 1,2,3,4,5,6,8 | F 16 L 37/12 |
| A | * Figures * | 7 | |
| | ----- | | |

TECHNICAL FIELDS SEARCHED (Int. Cl.5)

F 16 L

The present search report has been drawn up for all claims

| Place of search | Date of completion of the search | Examiner |
|---|---|---|
| THE HAGUE | 26-09-1989 | HUBEAU M.G. |

EPO FORM 1503 03.82 (P0401)